# EUROPEAN PATENT APPLICATION

(11) **EP 2 573 682 A1**
(43) Date of publication of application: **27.03.2013**
(21) Application number: 11782948.1
(22) Date of filing: 18.05.2011
(51) Int. Cl.: G06F 15/16

(54) **CLOUD SERVICE PUBLISHING METHOD, CLOUD SERVICE PUBLISHING INTERFACE MESSAGE PACKET AND CLOUD SERVICE BROKER**

(30) Priority: 20.05.2010 CN 201010189398
(71) Applicant: ZTE Corporation, Shenzhen, Guangdong 518057 (CN)
(72) Inventor: SHAO, Weixiang, Shenzhen Guangdong 518057 (CN)
(74) Representative: Ilgart, Jean-Christophe
(86) International application number: PCT/CN2011/074271
(87) International publication number: WO 2011/144031

(57) **Abstract**

The disclosure provides a cloud service publishing method, a cloud service publishing interface message packet and a cloud service broker, wherein the cloud service publishing method comprises: a cloud service broker sends a cloud service subscription request to a cloud service provider to request to subscribe to the cloud service information of the cloud service provider (S302); the cloud service broker receives a subscription notification from the cloud service provider, and obtains the cloud service information provided by the cloud service provider (S304). Through the disclosure, the cloud service broker may perform uniform management and utilization of the cloud service information of different cloud service providers, so that the utilization ratio of the cloud service information is improved.

## Description

### Field of the Invention

The disclosure relates to the field of communication, and in particular to a cloud service publishing method, a cloud service publishing interface message and a cloud service broker.

### Background of the Invention

As a new method for sharing the infrastructure, cloud computing can connect huge system pools to provide various IT services.

Cloud computing can be usually classified as narrow cloud computing and broad cloud computing. In the above, the broad cloud computing means the delivery and usage pattern of services, and it means getting the needed services through the network according to demand and in an easily extendable way. Such services can be services related to IT, software and internet, and also can be any other services.

At present, as the capability and interface between cloud computing services are incompatible, different cloud service providers have to publish their cloud service information through its own interfaces and platforms. For example, when Amazon publishes cloud services that can be provided by Amazon, the cloud service information of Amazon is published through its own specific interfaces and platforms. In this way, the cloud service information between different cloud service providers is relatively independent and dispersive, so that it is difficult to manage uniformly and it is inconvenient to use.

### Summary of the Invention

The disclosure provides a cloud service publishing method, a cloud service publishing interface message packet and a cloud service broker, to solve the problem that it is difficult to manage uniformly and it is inconvenient to use as the cloud service information between different cloud service providers is relatively independent and dispersive.

According to one aspect of the disclosure, a cloud service publishing method is provided, comprising: a cloud service broker sending a cloud service subscription request to a cloud service provider to request to subscribe to cloud service information of the cloud service provider; and the cloud service broker receiving a subscription notification from the cloud service provider, and obtaining the cloud service information provided by the cloud service provider.

Preferably, the step of the cloud service broker sending the cloud service subscription request to the cloud service provider comprises: the cloud service broker sending a cloud service publishing interface message packet to the cloud service provider, wherein the cloud service publishing interface message packet comprises request information used for subscribing to cloud services and/or resources provided by the cloud service provider; and the step of the cloud service broker receiving the subscription notification from the cloud service provider comprises: the cloud service provider using the cloud service publishing interface message packet, and carrying subscription notification information in the cloud service publishing interface message packet, wherein the subscription notification information is used for publishing information of the cloud services and/or resources provided by the cloud service provider.

Preferably, before the cloud service broker receiving the subscription notification from the cloud service provider, the method further comprises: the cloud service broker receiving a request response from the cloud service provider to confirm that the cloud service provider receives the cloud service subscription request from the cloud service broker.

Preferably, the cloud service publishing method further comprises: the cloud service broker sending a subscription notification response to the cloud service provider to confirm that the cloud service broker receives the subscription notification sent by the cloud service provider.

Preferably, the cloud service publishing interface message packet comprises information of one of: request information, response information and subscription notification information.

Preferably, the cloud service publishing interface message packet is transmitted by using at least one mode of: Hyper Text Transport Protocol (HTTP), Session Initiation Protocol (SIP), Representational State Transfer (REST), Simple Object Access Protocol (SOAP), Extensible Markup Language (XML)-based Hypertext Markup Language Version 5 (XHTML5), Application Programming Interface (API), and specific command.

According to another aspect of the disclosure, a cloud service publishing interface message packet is further provided, applied in information interaction of cloud service publish among a cloud service requester, a cloud service provider and a cloud service broker, and comprising information of one of: request information, response information and subscription notification information.

Preferably, the subscription notification information comprises information of at least one of: Infrastructure as a Service (IaaS) information, Data Storage as a Service (DaaS) information, Platform as a Service (PaaS) information, and Software as a Service (SaaS) information.

Preferably, the cloud service publishing interface message packet is transmitted by using at least one mode of: HTTP, SIP, REST, SOAP, XHTML5, API, and specific command.

Preferably, the information contents of information contents of the cloud service publishing interface message packet are described in at least one format of: XML format, JSON format or specific format.

According to still another aspect of the disclosure, a cloud service broker is further provided, comprising: a cloud service publishing interface module, configured to subscribe to cloud service information of a plurality of cloud service providers, and comprising: a publishing request module, configured to send a cloud service subscription request to a cloud service provider to request to subscribe to the cloud service information of the cloud service provider; and a subscription notification accepting module, configured to receive a subscription notification from the cloud service provider, and obtain the cloud service information provided by the cloud service provider.

Preferably, the publishing request module is configured to send a cloud service publishing interface message packet to the cloud service provider, and the cloud service publishing interface message packet comprises request information used for subscribing to cloud services and/or resources provided by the cloud service provider; and the subscription notification accepting module is configured to receive the cloud service publishing interface message packet sent by the cloud service provider, and the cloud service publishing interface message packet carries subscription notification information used for notifying the cloud service broker with information of the cloud services and/or resources provided by the cloud service provider.

Preferably, the cloud service publishing interface message packet comprises information of one of: request information, response information and subscription notification information.

Preferably, the subscription notification information comprises information of at least one of: Infrastructure as a Service (IaaS) information, Data Storage as a Service (DaaS) information, Platform as a Service (PaaS) information, and Software as a Service (SaaS) information.

Preferably, the cloud service publishing interface message packet is transmitted by using at least one mode of: Hyper Text Transport Protocol (HTTP), Session Initiation Protocol (SIP), Representational State Transfer (REST), Simple Object Access Protocol (SOAP), Extensible Markup Language (XML)-based Hypertext Markup Language Version 5 (XHTML5), Application Programming Interface (API), and specific command.

Preferably, information contents of the cloud service publishing interface message packet are described in at least one format of: XML format, JavaScript Serialized Object Notation (JSON) format and specific format.

In the disclosure, the cloud service broker sends cloud service subscription requests in uniform format and receives cloud service information fed back by different cloud service providers, so that the cloud service broker may perform uniform management and usage for the cloud service information of different cloud service providers in order to improve the utilization ratio of the cloud service information.

### Brief Description of the Drawings

Drawings described herein are provided for further understanding of the disclosure and form one part of the application. The exemplary embodiments of the disclosure and descriptions thereof are used for explaining the disclosure and do not constitute improper limit on the disclosure. In the drawings:
Fig. 1 illustrates a usage scenario diagram of a cloud service broker according to the embodiment of the disclosure;
Fig. 2 illustrates a system structure diagram of a cloud service broker according to the embodiment of the disclosure;
Fig. 3 illustrates a step flow chart of a cloud service publishing method according to embodiment 1 of the disclosure;
Fig. 4 illustrates a step flow chart of a cloud service publishing method according to embodiment 2 of the disclosure;
Fig. 5 illustrates a flow chart of a cloud service publishing method according to embodiment 3 of the disclosure;
Fig. 6 illustrates a flow chart of a cloud service publishing method according to embodiment 4 of the disclosure; and
Fig. 7 illustrates a structure block diagram of a cloud service broker according to the embodiment of the disclosure.

### Detailed Description of the Embodiments

The disclosure will be described hereinafter in detail with reference to drawings and embodiments. It should be noted that embodiments in the application and features in the embodiments may be combined with each other if there is no conflict.

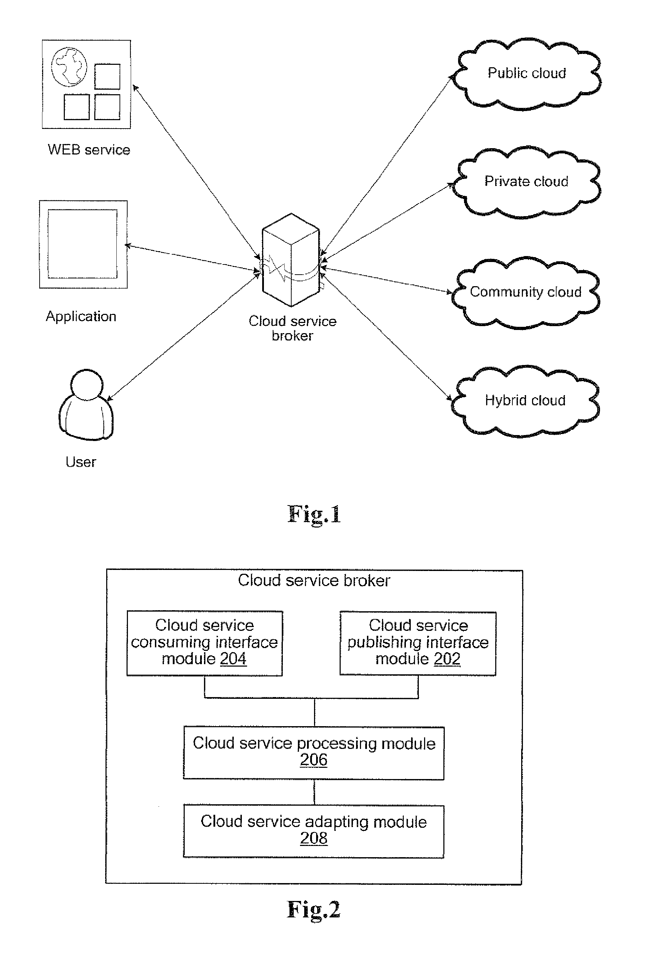

With reference to Fig. 1, a usage scenario diagram of a cloud service broker according to the embodiment of the disclosure is illustrated.

The cloud service broker (also called cloud service gateway) provides brokering services for various cloud service providers, and cloud provided by the cloud service providers can be private cloud, community cloud, public cloud or hybrid cloud. The cloud service broker can provide services including but not limited to arbitration service, proxy service, monitoring service, transition service, porting service, control service, deployment service, shielding service, permutation service, security service and synthesis service or the like between various cloud service providers (cloud computing service providers) such as private cloud, community cloud, public cloud or hybrid cloud and cloud service requesters (consumers) such as WEB service, application or user (enterprise user and individual consumer). The cloud service broker can abstract the incompatible capabilities and interfaces between different cloud computing services, and provide public, open and standard brokering services for consumers. It can solve the problem of incompatibility between different cloud platforms/cloud computing services, provide optimal one-stop services for consumers, and fully meet the demands of consumers.

As shown in Fig. 1, the cloud service broker is located between the cloud service requesters and the cloud service providers. Cloud service requesters such as WEB service, application or user (enterprise user and individual consumer) can access the cloud computing services and/or resources provided by the cloud service providers such as private cloud, community cloud, public cloud or hybrid cloud. It can be that the cloud service broker itself is not a cloud computing platform, and the cloud service broker also can be implemented by the cloud computing technology.

The cloud service broker can obtain information of various cloud computing services and/or resources provided by the cloud service providers through the cloud service publish function. Through the cloud service publish function, the cloud service broker may subscribe to information of the cloud computing services and/or resources published and supported by the cloud service providers such as private cloud, community cloud, public cloud or hybrid cloud. The cloud service providers such as private cloud, community cloud, public cloud or hybrid cloud can notify the cloud service broker with information of the supported cloud computing services and/or resources.

With reference to Fig. 2, a system structure diagram of a cloud service broker according to the embodiment of the disclosure is illustrated, comprising: a cloud service publishing interface module 202, a cloud service consuming interface module 204, a cloud service processing module 206 and a cloud service adapting module 208.

In the above, the cloud service publishing interface module 202 (Cloud Service Publishing interface) is configured to subscribe to information of cloud computing services and/or resources provided by a plurality of cloud service providers. Specifically, the cloud service publishing interface module 202 is responsible for providing information of cloud computing services and/or resources of various external cloud service providers for the cloud service broker. Through the cloud service publishing interface module 202, the cloud service broker may subscribe to information of the cloud computing services and/or resources published and supported by the cloud service providers such as private cloud, community cloud, public cloud or hybrid cloud. The cloud service providers such as private cloud, community cloud, public cloud or hybrid cloud can notify the cloud service broker with information of the supported cloud computing services and/or resources.

Preferably, the cloud service subscription/notification of the cloud service broker may be performed synchronously to the cloud service consumer request. In the dynamic synthesis service mode, after the cloud service broker receives a cloud service consumer request, according to the abstract service logic, the cloud service broker first subscribes to an actual and specific service through the cloud service publishing interface module 202, and then converts the abstract service logic to the specific service logic, and finally executes the specific service logic.

In addition, the cloud service subscription/notification of the cloud service broker may be performed asynchronously with other operations of the cloud service broker. Through the cloud service publishing interface module 202, the cloud service broker can regularly, according to demand, subscribe to and receive information of the cloud computing services and/or resources published and supported by the cloud service providers such as private cloud, community cloud, public cloud or hybrid cloud.

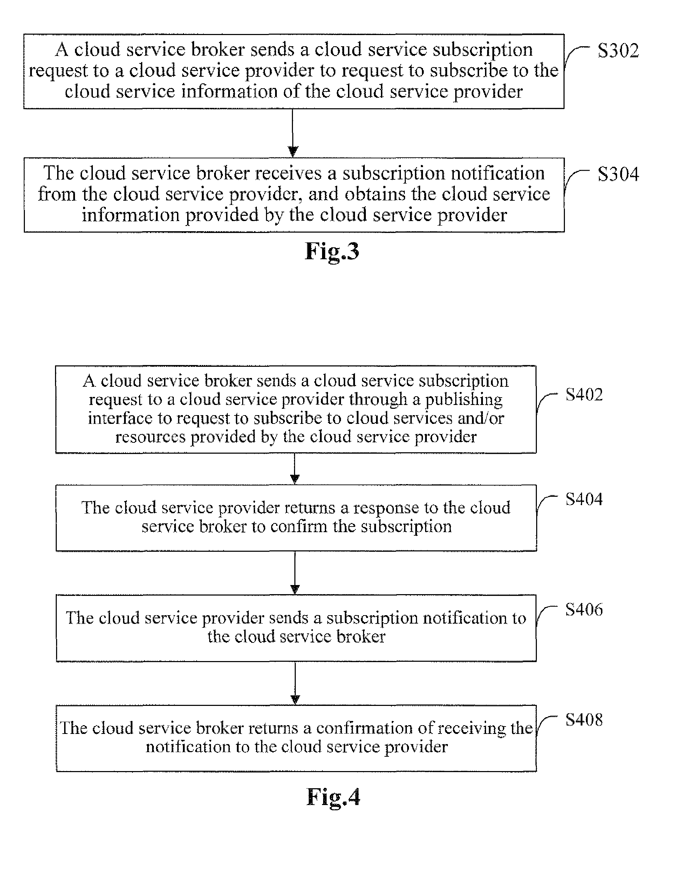

With reference to Fig. 3, a step flow chart of a cloud service publishing method according to embodiment 1 of the disclosure is illustrated, comprising the following steps:

S302: A cloud service broker sends a cloud service subscription request to a cloud service provider to request to subscribe to the cloud service information of the cloud service provider; and

S304: The cloud service broker receives a subscription notification from the cloud service provider, and obtains the cloud service information provided by the cloud service provider.

In the above, the subscription notification comprises the cloud service information of the cloud service provider, and the cloud service information is used for indicating cloud services and/or resources that the cloud service provider is capable of providing.

In this step, after receiving the subscription request from the cloud service broker, the cloud service provider sends the cloud service information that the cloud service provider is capable of providing to the cloud service broker through the subscription notification.

In the related technologies, different cloud service providers publish their own cloud service information independently. Therefore, the system is unable to uniformly manage and use the cloud service information, and also it is inconvenient for the cloud service requester to obtain and use the cloud service information. Through the embodiment, the cloud service broker uses the subscription request to obtain the cloud service information of different cloud service providers, and further uniformly manages and uses the cloud service information. When the cloud service requester needs to use the cloud service, the cloud service requester only needs to send a request to the cloud service broker, the cloud service broker provides proper cloud service resources to the cloud service requester according to all cloud service information stored in the cloud service broker, so that the utilization ratio of the cloud service information is improved.

The embodiment of the disclosure provides a cloud service publishing interface message packet, used in the cloud service publishing method to realize publication of the cloud service information.

The cloud service publishing interface message packet is transmitted by using at least one mode of: HTTP, SIP, REST, SOAP, XHTML5, API, and specific command. The information contents of the cloud service publishing interface message packet are described in at least one of the following formats: XML format, JSON format or other specific formats.

The cloud service broker may use message packets in XML format, JSON format or other specific formats to obtain information of the cloud services and/or resources of the cloud service provider in modes of HTTP, SIP, REST, SOAP, XHTML5, API, specific command or the like.

The cloud service publishing interface message packet comprises at least one of the following information: request information, response information and subscription notification information. When SIP is used, methods such as SUBSCRIBE and NOTIFY may be used.

The specific protocol interface method of the cloud service publishing interface message packet is as follows.

The cloud service publishing interface message packet, csb-publish, comprises elements such as request, response and subscription notification.

In the above, <csbpublish> is a root element, which comprises sub-elements such as <csbrequest>, <csbresponse> and <csbnotification>.
(1) Sub-element <csbrequest> is a publishing request element, through which the cloud service broker initiates a request to the cloud service provider, comprising a sub-element <subscription>.
   <subscription> is a subscription element, through which the cloud service broker subscribes to information of cloud computing services and/or resources supported and published by the cloud service provider, comprising one or more of the following attributes and sub-elements:
   attribute: Id, uniquely indicating the subscription session between the cloud service broker and the cloud service provider;
   attribute: Seqnumber (sequence number);
   attribute: Action (the action of subscription): it may be create (a new subscription), update (a subscription), remove (a subscription) and terminate (a notification);
   sub-element: <expires>, subscription duration, in unit of second; and
   sub-element: <frequency>, frequency of notification, in unit of second.
(2) Sub-element <csbresponse> is a response element, used for responding to requests such as cloud service subscription request, subscription notification or the like. <csbresponse> comprises the following attributes:
   attribute: status codes, indicating the response statuses, such as 200: OK, 400: syntax error, 401: subscription cannot be created, 402: subscription cannot be updated, 403: subscription cannot be removed, 404: subscription does not exist, 405: subscription has existed, 420: unsupported attribute or element; and
   attribute: reason.
(3) sub-element <csbnotification> is a notification element, through which the cloud service provider notifies the cloud service broker with information of the cloud computing services and/or resources supported and published by the cloud service provider, comprising one or more of the following attributes and sub-elements:
   attribute: Id, uniquely indicating the subscription session between the cloud service broker and the cloud service provider, and identical to the Id in <subscription>;
   attribute: Seqnumber (sequence number);
   sub-element: <cloud-service-id>, cloud service identifier;
   sub-element: <cloud-service-status>, cloud service status;
   sub-element: <cloud-service-URI>, cloud service uniform resource identifier;
   sub-element: <IaaS>, IaaS information supported and published by the cloud;
   sub-element: <DaaS>, Daas information supported and published by the cloud;
   sub-element: <PaaS>, PaaS information supported and published by the cloud; and
   sub-element: <SaaS>, SaaS information supported and published by the cloud.

In the above,
(A) <IaaS> is an infrastructure as a service information element comprising one or more of the following common attributes and sub-elements:
   <compute>: computing resource sub-element, comprising architecture (CPU architecture) attribute, cores (CPU cores) attribute, hostname attribute, speed (CPU speed) attribute, memory attribute, status attribute (the status of the computing resource), and comprising the supported operations of start, stop, restart and suspend;
   <Network>: network resource sub-element, comprising vlan 802.1q identity attribute, label attribute (label-based vlan), address attribute (network address), gateway attribute (gateway address), allocation attribute (address allocation mechanism), and comprising the supported operations of down and up;
   <Storage>: storage resource sub-element, comprising size attribute (size of drive), status attribute (status of storage resources), and comprising the supported operations of backup, offline, online, resize and snapshot; and
   <Virtualization>: virtualization sub-element, comprising attributes and sub-elements such as DiskSection (disk information), NetworkSection (network information), DeploymentOptionSection (deployment option information), VirtualSystemCollection (virtual system collection information), VirtualSystem (virtual system information), OperatingSystemSection (operating system information), InstallSection (system install information), ResourceAllocationSection (resource allocation information) and StartupSection (system startup information) and corresponding executed operations.
   When the cloud computing platform of specific cloud service providers, such as Amazon, ElasticHosts, Flexiscale, GoGrid, Sun Cloud, Rackspace Cloud Servers, VMware vSphere and Microsoft Windows Azure, sends a subscription notification message to the cloud service broker to notify the cloud service broker with its IaaS information, it can also be that the <IaaS> information element in the subscription notification message does not comprise the common attributes and sub-elements in <IaaS>. Instead, it directly comprises its dedicated information, such as specific information contents of AMAZON Elastic Compute Cloud, AMAZON Elastic MapReduce, Elastic Load Balancing, AMAZON Virtual Private Cloud, Microsoft Windows Azure Web Role Instance or the like.
(B) <DaaS> is a data storage as a service information element, comprising one or more of the following common attributes and sub-elements:
   <DataObject>: data object sub-element, comprising metadata, mimetype, objectURI (universal resource identifier), objectID, parentURI, domainURI, capabilitiesURI, Location, value and the like, and comprising the supported operations of create, read, update, delete and the like;
   <Container>: container sub-element, comprising metadata, objectURI, objectID, parentURI, domainURI, capabilitiesURI, location, exports interface protocol (Open Cloud Computing Interface (OCCI) interface, internet Small Computer System Interface (iSCSI) protocol, Network File System (NFS) interface protocol, and Fiber Channel over Ethernet (FCoE) protocol), snapshots, children and the like, and comprising the supported operations of create, read, update, delete and the like;
   <Domain>: domain sub-element, comprising metadata, objectURI, objectID, parentURI, domainURI, capabilitiesURI, location, children or the like, and comprising the supported operations of create, read, update, delete and the like;
   <Queue>: queue sub-element, comprising metadata, objectURI, objectID, parentURI, domainURI, capabilitiesURI, queueValues, location or the like, and comprising the supported operations of create, read, update, delete and the like; and
   <Capabilities>: capabilities sub-element, comprising cloud storage system-wide capabilities, storage system metadata capabilities, data system metadata capabilities, data object capabilities, container capabilities, domain capabilities and queue object capabilities, and comprising the supported operation of read.
   When the cloud computing platform of specific cloud service providers, such as Amazon, Microsoft and Nirvanix, sends a notification message to the cloud service broker to notify the cloud service broker with its DaaS information, it can be that the
   <DaaS> information element in the notification message does not comprise the common attributes and sub-elements in <DaaS>. Instead, it directly comprises its dedicated information, such as specific information contents of AMAZON Simple Storage Service, AMAZON Elastic Block Storage, Windows Azure Storage or the like.
(C) <PaaS> is a platform as a service information element, comprising one or more of the following common attributes and sub-elements:
   <Distributed file system>: distributed file system sub-element;
   <Distributed database>: distributed database sub-element;
   <Distributed cache>: distributed cache sub-element;
   <Distributed computing schedule>: distributed computing schedule sub-element;
   <Session>: session sub-element; and
   <Messaging>: messaging sub-element.
   When the cloud computing platform of specific cloud service providers, such as Amazon, Force, Google, Microsoft and Oracle, sends a notification message to the cloud service broker to notify the cloud service broker with its PaaS information, it can be that the <PaaS> information element in the subscription notification message does not comprise the common attributes and sub-elements in <PaaS>. Instead, it directly comprises its dedicated information, such as specific information contents of AMAZON SimpleDB, AMAZON Relational Database Service, AMAZON Simple Queue Service, Google BigTable, Google AppEngine, Microsoft Biztalk Service, Oracle coherence, Salesforce.com's application development platform or the like.
(D) <SaaS> is a software as a service information element, and SaaS can comprise one or more of the following common attributes and sub-element contents:
   communication services, such as short message service, multimedia message service, presence service, chat service, voice call service, video call service, one number service, coloring ring back tone (CRBT) service, multimedia conference service, and call center service;
   location services, such as location service and landmark service;
   content services, such as video share service, file share service and content sharing service;
   enterprise application services, such as custom resource management service, document management service, business intelligence service, and collaboration service;
   common services, such as authentication service, temporary storage service, poll/voting service, tag service, contacts service, redirect service and calendar service; and
   socialization services, such as blog service, Facebook service and Twitter service.

When the cloud computing platform of specific cloud service providers, such as IBM, SalesForce, Google, Microsoft and Oracle, sends a notification message to the cloud service broker to notify the cloud service broker with its SaaS information, it can be that the <SaaS> information element in the subscription notification message does not comprise the common attributes and sub-elements in <SaaS>. Instead, it directly comprises its dedicated information, such as specific information contents of IBM Lotus Live, Google Apps, Salesforce CRM, Oracle on Demand, and Microsoft Online Service.

All embodiments of the disclosure can be implemented by using the above cloud service publishing interface message packet to publish cloud services.

With reference to Fig. 4, a step flow chart of a cloud service publishing method according to embodiment 2 of the disclosure is illustrated, comprising the following steps.

S402: A cloud service broker sends a cloud service subscription request to a cloud service provider through a publishing interface to request to subscribe to cloud services and/or resources provided by the cloud service provider.

For example, the cloud service broker sends a cloud service publishing interface message packet to the cloud service provider, the cloud service publishing interface message packet comprises the request information, and the request information is used for subscribing to the cloud services and/or resources that the cloud service provider is capable of providing.

S404: The cloud service provider returns a response to the cloud service broker to confirm the subscription.

The response can be sent to the cloud service broker by the cloud service provider through the cloud service publishing interface message packet comprising a response message. By the returning of the response, it is convenient for the cloud service broker to know the message reception condition of the cloud service provider in time.

S406: The cloud service provider sends a subscription notification to the cloud service broker.

The subscription notification comprises information of cloud services and/or resources provided by the cloud service provider. The cloud service provider can use the cloud service publishing interface message packet and carry the subscription notification information in the cloud service publishing interface message packet, to publish information of cloud services and/or resources.

S408: The cloud service broker returns a confirmation of receiving the notification to the cloud service provider.

In this step, the cloud service broker can send the confirmation to the cloud service provider through the cloud service publishing interface message packet comprising a response message, to confirm that the cloud service broker receives information of cloud services and/or resources sent by the cloud service provider.

The cloud service broker and the cloud service provider interact with each other through the cloud service publishing interface message packet, so that the compatibility is improved, and the implementation is convenient.

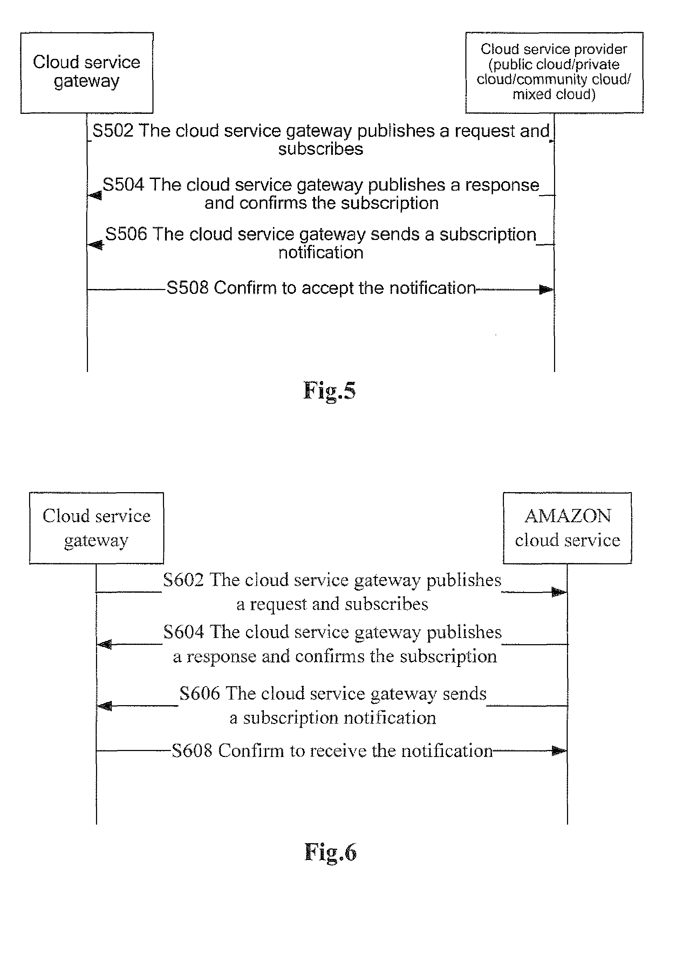

With reference to Fig. 5, a flow chart of a cloud service publishing method according to embodiment 3 of the disclosure is illustrated. The embodiment shows a cloud service publishing flow between a cloud service broker and a cloud service provider such as public cloud/private cloud/community cloud/hybrid cloud, which flow comprises the following steps.

S502: The cloud service broker sends a publishing request to the cloud service provider such as public cloud/private cloud/community cloud/hybrid cloud to request to subscribe to information of cloud computing resources and/or services of the cloud service provider such as public cloud/private cloud/community cloud/hybrid cloud, to create a new subscription.

The specific message format contents are as follows:

```
               CSB (Cloud Service Brokering) - > Cloud (publish request)
                HTTP POST or SIP SUBSCRIBE
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
         <csbrequest>
              <subscription action="create" seqnumber="1" id="p0T65U">
                   <expires>600</expires>
                   <frequency>20</frequency>
              </subscription>
         </csbrequest>
   </csbpublish>
```

S504: The cloud service provider such as public cloud/private cloud/community cloud/hybrid cloud returns a publishing response to the cloud service broker to confirm the subscription.

The specific message format contents are as follows:

```
               CSB < - Cloud (request accepted)
               200 OK
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
              <csbresponse status="200" reason="OK: Request accepted"/>
   </csbpublish>
```

S506: The cloud service provider such as public cloud/private cloud/community cloud/hybrid cloud sends a subscription notification to the cloud service broker to notify the cloud service broker with information of cloud computing resources and/or services of the cloud service provider.

The specific message format contents are as follows:

```
               CSB < - Cloud (event notification from CLOUD)
   ------------------------------------------
                HTTP PUT or SIP NOTIFY
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
         <csbnotification seqnumber="1" id=" p0T65U">
              <cloud-service-id>a1b2c3d4</cloud-service-id>
              <cloud-service-status>active</cloud-service-status>
              <cloud-service-URI>.......</cloud-service-URI>
              <laaS>
                   <compute>
                         <architecture>......</architecture>
                         <cores >......</cores>
                         <hostname>......</hostname>
                         <speed>......</speed>
                         <memory>......</memory>
                         <status>......</status>
                   </compute>
                   <Network>
                         <vlan>......</vlan>
                         <label>......</label>
                         <address>......</address>
                         <gateway>......</gateway>
                         <allocation>......</allocation>
                   </Network>
                   <Storage>
                         <size>......</size>
                         <status>......</status>
                   </Storage>
                   <Virtualization>
                         <DiskSection>......</DiskSection>
                         <NetworkSection>......</NetworkSection>
                         <DeploymentOptionSection>......</DeploymentOptionSection>
                         <VirtualSystemCollection>
                                <VirtualSystem>
                                <OperatingSystemSection>......</OperatingSystemSection>
                                      <InstallSection>......</InstallSection>
    </VirtualSystem>
    <ResourceAllocationSection>......</ResourceAllocationSection>
                                <StartupSection>......</StartupSection>
    </VirtualSystemCollection>
                   </Virtualization>
              </laaS>
              <DaaS>
                   <DataObject>
                         <metadata>.....</metadata>
                         <objectURl>.....</objectURl>
                         <objectID>.....</objectID>
                        <parentURI>.....</parentURI>
                        <domainURI>.....</domainURI>
                        <capabilitiesURI>.....</capabilitiesURI>
                        <Mimetype>.....</Mimetype>
                        <value>.....</value>
                        <Location>.....</Location>
    </DataObject>
                   <Container>
                         <metadata>.....</metadata>
                         <objectURI>.....</objectURI>
                         <objectID>.....</objectID>
                         <parentURI>.....</parentURI>
                         <domainURI>.....</domainURI>
                         <capabilitiesURI>.....</capabilitiesURI>
                         <Location>.....</Location>
                         <exports>.....</exports>
                         <snapshots>.....</snapshots>
                         <children>.....</children>
    </Container>
                   <Domain>
                         <metadata>.....</metadata>
                         <objectURI>.....</objectURI>
                         <objectID>.....</objectID>
                         <parentURI>.....</parentURI>
                         <domainURI>.....</domainURI>
                         <capabilitiesURI>.....</capabilitiesURI>
                         <children>.....</children>
                         <Location>.....</Location>
    </Domain>
                   <Queue>
                         <metadata>.....</metadata>
                         <objectURI>.....</objectURI>
                         <objectID>.....</objectID>
                         <parentURI>.....</parentURI>
                         <domainURI>.....</domainURI>
                         <capabilitiesURI>.....</capabilitiesURI>
                         <queueValues>.....</queueValues>
    </Queue>
              </DaaS>
              <PaaS>
                   <Distributed file system>
    .................................................
                   </Distributed file system>
                   <Distributed database>
    .................................................
                   </Distributed database>
                   <Distributed cache>
    .................................................
                   </Distributed cache>
                   <Distributed computing schedule>
    .................................................
                   </Distributed computing schedule>
                   <session>
    .................................................
                   </session>
                   < Messaging >
    .................................................
                   </ Messaging >
              </PaaS>
              <SaaS>
                   <Custom Resource Management>
    .................................................
                   </Custom Resource Management>
                   <Video share>
    .................................................
                   </Video share>
                   <File share>
    .................................................
                   </File share>
                   <Short Message Service>
    .................................................
                   </Short Message Service>
                   <Multimedia Message Service>
    .................................................
                   </Multimedia Message Service>
              </SaaS>
         </csbnotification>
   </csbpublish>
```

S508: The cloud service broker confirms the receiving of the notification. The specific message format contents are as follows:

```
               CSB- > Cloud (200 accept notification)
   ------------------------------------------
               200 OK
```

With reference to Fig. 6, a flow chart of a cloud service publishing method according to embodiment 4 of the disclosure. The embodiment shows a cloud service publishing flow between the cloud service broker and the WEB service of AMAZON cloud computing platform, comprising the following steps.

S602: The cloud service broker sends a publishing request to the AMAZON cloud computing platform to request to subscribe to information of cloud computing resources and/or services of AMAZON, to create a new subscription.

The specific message format contents are as follows:

```
               CSB- > AMAZON Cloud (publish request)
               ------------------------------------------
                HTTP POST or SIP SUBSCRIBE
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
         <csbrequest>
              <subscription action="create" seqnumber="1" id="g0H78b">
                   <expires>600</expires>
                   <frequency>20</frequency>
              </subscription>
         </csbrequest>
   </csbpublish>
```

S604: The AMAZON cloud computing platform returns a publishing response to the cloud service broker to confirm the subscription.

The specific message format contents are as follows:

```
               CSB < - AMAZON Cloud (request accepted)
   ------------------------------------------
               200 OK
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
              <csbresponse status="200" reason="OK: Request accepted"/>
   </csbpublish>
```

S606: The AMAZON cloud computing platform sends a subscription notification to the cloud service broker to notify the cloud service broker with information of cloud computing resources and/or services of the AMAZON cloud computing platform.

The specific message format contents are as follows:

```
               CSB < - AMAZON Cloud (event notification from CLOUD)
   ------------------------------------------
                HTTP PUT or SIP NOTIFY
                Message packet: csb-publish
               Content-type: application/csb-publish+xml
    <?xml version="1.0" encoding="UTF-8" standalone="yes"?>
    <csbpublish version="1.0" xmlns="urn: ietf: params: xml: ns: csb-publish">
         <csbnotification seqnumber="1" id="g0H78b">
              <cloud-service-id>amazon</cloud-service-id>
              <cloud-service-status>active</cloud-service-status>
              <cloud-service-URI> http :
              //aws.amazon.com/...</cloud-service-URI>
             <IaaS>
   <Amazon Elastic Compute Cloud>
    ............................
    </Amazon Elastic Compute Cloud>
    <Amazon Elastic MapReduce>
   ............................
   <Elastic Load Balancing>
    ............................
   <Elastic Load Balancing>
   <Amazon Virtual Private Cloud>
    ............................
    </Amazon Virtual Private Cloud>
              </IaaS>
             <DaaS>
   <Amazon Simple Storage Service>
   ............................
   </Amazon Simple Storage Service>
   <Amazon Elastic Block Storage>
    ............................
    </Amazon Elastic Block Storage>
              </DaaS>
             <PaaS>
   <Amazon SimpleDB>
    ............................
   </Amazon SimpleDB>
   <Amazon Relational Database Service>
    ............................
   </Amazon Relational Database Service>
   <Amazon Simple Queue Service>
    ............................
    </Amazon Simple Queue Service>
              </PaaS>
         </csbnotification>
   </csbpublish>
```

S608: The cloud service broker confirms to the AMAZON cloud computing platform that notification is received.

The specific message format contents are as follows:

```
               CSB- > AMAZON Cloud (200 accept notification)
   ------------------------------------------
               200 OK
```

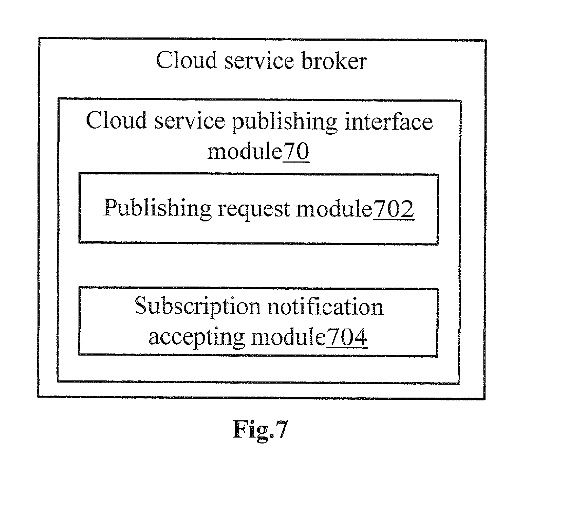

With reference to Fig. 7, a structure bock diagram of a cloud service broker according to the embodiment of the disclosure is illustrated, comprising: a cloud service publishing interface module 70, configured to subscribe to the cloud service information of a plurality of cloud service providers, comprising:
a publishing request module 702, configured to send a cloud service subscription request to a cloud service provider to request to subscribe to the cloud service information of the cloud service provider; and a subscription notification accepting module 704, configured to receive a subscription notification from the cloud service provider, and obtain the cloud service information provided by the cloud service provider.

Preferably, the publishing request module 702 is configured to send a cloud service publishing interface message packet to the cloud service provider, and the cloud service publishing interface message packet comprises the request information that is used for subscribing to cloud services and/or resources provided by the cloud service provider; and the subscription notification accepting module 704 is configured to receive the cloud service publishing interface message packet sent by the cloud service provider, and the cloud service publishing interface message packet carries the cloud service subscription notification to notify the cloud service broker with information of the cloud services and/or resources provided by the cloud service provider.

Preferably, the cloud service publishing interface message packet comprises one of the following information: request information, response information and subscription notification information.

Preferably, the cloud service publishing interface message packet is transmitted by using at least one mode of: HTTP, SIP, REST, SOAP, XHTML5, API, and other specific formats.

Preferably, the cloud service broker can send a cloud service publishing interface message packet to the cloud service provider through the publishing request module 702 of a cloud service publishing interface 70, and the message packet carries a cloud service subscription request used to request to subscribe to cloud services and/or resources of the cloud service provider; and the cloud service provider can also send a cloud service publishing interface message packet to the cloud service broker through the subscription notification accepting module 704 of the cloud service publishing interface, and the massage packet carries a cloud service subscription notification used for notifying the cloud service broker with information of the cloud services and/or resources of the cloud service provider.

Preferably, the cloud service broker may further comprise: a response receiving module, configured to receive a request response from the cloud service provider to confirm that the cloud service provider receives the cloud service subscription request of the cloud service broker; and/or, a notification confirming module, configured to send a subscription notification response to the cloud service provider to confirm that the cloud service broker receives the subscription notification from the cloud service provider.

Of course, person skilled in the art should understand that the above modules or steps of the disclosure could be achieved through general calculating devices. They can be concentrated in a single calculating device or distributed in a network formed by multiple calculating devices. Optionally, they can be achieved by program codes that can be executed by calculating devices. Thus, they can be stored in storage devices to be executed by calculating devices. Under certain situation, the shown or described steps can be executed according to an order different from the above order, or they can be achieved by respectively making them into many integrated circuit modules or by making multiple modules or steps among them into a single integrated circuit module. In this way, the disclosure is not limited to combinations of any specific hardware and software.

The above contents are only preferred embodiments of the disclosure and should not be used to limit the disclosure. For person skilled in the art, the disclosure may have various alternations and changes. Any modifications, equivalent replacements and improvements within the spirit and principle of the disclosure should be contained within the protection scope of the disclosure.

## Claims

1. A cloud service publishing method, **characterized by** comprising:
a cloud service broker sending a cloud service subscription request to a cloud service provider to request to subscribe to cloud service information of the cloud service provider; and
the cloud service broker receiving a subscription notification from the cloud service provider, and obtaining the cloud service information provided by the cloud service provider.

2. The method according to claim 1, **characterized in that** the step of the cloud service broker sending the cloud service subscription request to the cloud service provider comprises:
the cloud service broker sending a cloud service publishing interface message packet to the cloud service provider, wherein the cloud service publishing interface message packet comprises request information used for subscribing to cloud services and/or resources provided by the cloud service provider; and
the step of the cloud service broker receiving the subscription notification from the cloud service provider comprises:
the cloud service provider using the cloud service publishing interface message packet, and carrying subscription notification information in the cloud service publishing interface message packet, wherein the subscription notification information is used for publishing information of the cloud services and/or resources provided by the cloud service provider.

3. The method according to claim 1, **characterized in that** before the cloud service broker receiving the subscription notification from the cloud service provider, the method further comprises:
the cloud service broker receiving a request response from the cloud service provider to confirm that the cloud service provider receives the cloud service subscription request from the cloud service broker.

4. The method according to claim 1, **characterized by** further comprising:
the cloud service broker sending a subscription notification response to the cloud service provider to confirm that the cloud service broker receives the subscription notification sent by the cloud service provider.

5. The method according to claim 2, **characterized in that** the cloud service publishing interface message packet comprises information of one of: request information, response information and subscription notification information.

6. The method according to claim 5, **characterized in that** the cloud service publishing interface message packet is transmitted by using at least one mode of: Hyper Text Transport Protocol (HTTP), Session Initiation Protocol (SIP), Representational State Transfer (REST), Simple Object Access Protocol (SOAP), Extensible Markup Language (XML)-based Hypertext Markup Language Version 5 (XHTML5), Application Programming Interface (API), and specific command.

7. A cloud service publishing interface message packet, applied in information interaction of cloud service publish among a cloud service requester, a cloud service provider and a cloud service broker, **characterized by** comprising information of one of: request information, response information and subscription notification information.

8. The cloud service publishing interface message packet according to claim 7, **characterized in that** the subscription notification information comprises information of at least one of: Infrastructure as a Service (IaaS) information, Data Storage as a Service (DaaS) information, Platform as a Service (PaaS) information, and Software as a Service (SaaS) information.

9. The cloud service publishing interface message packet according to claim 7, **characterized in that** the cloud service publishing interface message packet is transmitted by using at least one mode of: Hyper Text Transport Protocol (HTTP), Session Initiation Protocol (SIP), Representational State Transfer (REST), Simple Object Access Protocol (SOAP), Extensible Markup Language (XML)-based Hypertext Markup Language Version 5 (XHTML5), Application Programming Interface (API), and specific command.

10. The cloud service publishing interface message packet according to claim 7, **characterized in that** information contents of the cloud service publishing interface message packet are described in at least one format of: XML format, JavaScript Serialized Object Notation (JSON) format and specific format.

11. A cloud service broker, **characterized by** comprising:
a cloud service publishing interface module, configured to subscribe to cloud service information of a plurality of cloud service providers, and comprising:
a publishing request module, configured to send a cloud service subscription request to a cloud service provider to request to subscribe to the cloud service information of the cloud service provider; and
a subscription notification accepting module, configured to receive a subscription notification from the cloud service provider, and obtain the cloud service information provided by the cloud service provider.

12. The cloud service broker according to claim 11, **characterized in that** the publishing request module is configured to send a cloud service publishing interface message packet to the cloud service provider, and the cloud service publishing interface message packet comprises request information used for subscribing to cloud services and/or resources provided by the cloud service provider; and
the subscription notification accepting module is configured to receive the cloud service publishing interface message packet sent by the cloud service provider, and the cloud service publishing interface message packet carries subscription notification information used for notifying the cloud service broker with information of the cloud services and/or resources provided by the cloud service provider.

13. The cloud service broker according to claim 12, **characterized in that** the cloud service publishing interface message packet comprises information of one of: request information, response information and subscription notification information.

14. The cloud service broker according to claim 13, **characterized in that** the subscription notification information comprises information of at least one of: Infrastructure as a Service (IaaS) information, Data Storage as a Service (DaaS) information, Platform as a Service (PaaS) information, and Software as a Service (SaaS) information.

15. The cloud service broker according to claim 13, **characterized in that** the cloud service publishing interface message packet is transmitted by using at least one mode of: Hyper Text Transport Protocol (HTTP), Session Initiation Protocol (SIP), Representational State Transfer (REST), Simple Object Access Protocol (SOAP), Extensible Markup Language (XML)-based Hypertext Markup Language Version 5 (XHTML5), Application Programming Interface (API), and specific command.

16. The cloud service broker according to claim 13, **characterized in that** information contents of the cloud service publishing interface message packet are described in at least one format of: XML format, JavaScript Serialized Object Notation (JSON) format and specific format.
